# EUROPÄISCHE PATENTSCHRIFT

(11) **EP 2 558 757 B1**
(45) Veröffentlichungstag und Bekanntmachung des Hinweises auf die Patenterteilung: **17.08.2016**
(21) Anmeldenummer: 11714697.7
(22) Anmeldetag: 11.04.2011
(51) Int. Cl.: F16K 31/06, F16K 27/04, F15B 13/044

(54) **STROMREGELVENTIL**
FLOW CONTROL VALVE
RÉGULATEUR DE DÉBIT

(30) Priorität: 10.04.2010 DE 102010014496
(43) Veröffentlichungstag der Anmeldung: 20.02.2013
(73) Patentinhaber: Hydac Fluidtechnik GmbH, 66280 Sulzbach/Saar (DE)
(72) Erfinder: WARD, Christopher, Sycamore, IL 60178 (US); MALONE, Peter, Glenview, IL 60026 (US)
(74) Vertreter: Bartels, Martin Erich Arthur
(86) Internationale Anmeldenummer: PCT/EP2011/001787
(87) Internationale Veröffentlichungsnummer: WO 2011/124395

(56) Entgegenhaltungen:
- DE-A1- 10 133 990
- DE-A1-102008 042 058
- FR-A1- 2 805 492

## Beschreibung

Die Erfindung betrifft ein Stromregelventil.

Stromregelventile, insbesondere ein 2-Wege-Stromregelventil, haben die Funktion, den Volumenstrom unabhängig von der Druckdifferenz und der Viskosität eines Fluids auf einen konstanten Wert zu regeln. In Abhängigkeit von der Ausführung des jeweiligen Stromregelventils kann auf der Vor- oder Rücklaufseite eines angeschlossenen hydraulischen Verbrauchers geregelt werden. Mit Hilfe von Proportionalmagneten als Aktuatoren können Stromregelventile mit einstellbarem Volumenstrom verwirklicht werden, wobei ein Proportional-Magnet eine Parallelverschiebung der Kennlinie des betreffenden Ventils veranlassen kann.

Die Volumenstrom-Einstellung erfolgt dabei stufenlos durch den Proportionalmagneten, der durch einen elektronischen Stromverstärker angesteuert wird. Die Proportionalventile können lagegeregelt oder kraftgeregelt sein. In der Regel wirkt ein als Schieberkolben ausgebildeter Steuerkolben unter der Wirkung der Magnetkraft des Proportionalmagneten gegen eine Druckfeder, wobei sich ein Blendenquerschnitt entsprechend vergrößert oder verkleinert. Die Druckunabhängigkeit des Volumenstromes wird durch ein Differenzdruckventil (Druckwaage) erreicht. Es sorgt für eine konstante Druckdifferenz an der Messblende und ist dieser regelmäßig nachgeschaltet.

Ein Wegeventil mit der vorstehend genannten Funktion ist aus der DE 196 04 317 A1 bekannt. Dieses Ventil weist einen hohlkegelförmigen Ventilsitz auf, der mit einem Ventilelement einen Ventilöffnungsbereich ausbildet. Das Ventilelement weist dabei einen Kugelsegmentabschnitt auf. Der Radius des Kugelsegmentabschnittes und der Öffnungswinkel des hohlkegelförmigen Ventilsitzes sind derart festgelegt, dass ein Dichtungsbereich gebildet ist, wenn das Ventilelement auf dem Ventilsitz aufsitzt. Das Ventilelement wird in einem Ventilkörper bewegbar geführt, wobei der Ventilkörper eine entsprechende Innenumfangsfläche aufweist, die über die gesamte Länge des Ventilelements einen im wesentlichen gleichmäßigen Durchmesser aufweist.

Insbesondere solche in Sitzbauweise ausgeführten Stromregelventile weisen zumindest zwei Problembereiche auf. Zum einen ist der Strombedarf für den Proportional-Magneten relativ groß und zum anderen lassen sie sich in Grenzöffnungsbereichen nur schwer exakt ansteuern. So weist das in der Druckschrift offenbarte elektromagnetische Wegeventil eine flache Kennlinie auf, so dass die Solenoid-Antriebskraft fast über den gesamten Bereich des Ventilhubes in Beziehung auf einen identischen Antriebsstrom vergleichmäßigt wird. Dies wird dadurch bewirkt, dass die Solenoid-Antriebskraft derart gesetzt wird, dass sie eine flache Kennlinie aufweist, um die Steuerung des Ventilöffnungsgrades einfacher zu gestalten; allein dies hat den Nachteil, dass die Solenoid-Antriebskraft relativ groß in Bezug auf eine Änderung in einem Bereich wird, indem der Stromwert entsprechend groß ist. Dies resultiert aus dem Zusammenhang, dass die Solenoid-Antriebskraft proportional zum Quadrat des Stromwertes ist. Die Änderungsgröße der Solenoid-Antriebskraft wird deshalb in Bezug auf dieselbe Änderungsgröße in dem Strom größer.

Die zu steuernde Flussrate eines Fluids neigt deshalb bei solchen Ventilen zu einer abrupten Änderung in Bezug auf eine kleine Änderung des Antriebsstroms in einem Bereich, indem der Öffnungsgrad des elektromagnetischen Proportional-Stromregelventils klein ist. Solche Stromregelventile in Sitzbauart haben demnach das Problem, dass eine genaue Flussraten-Steuerung in einem Bereich, mit niedriger Flussrate, bei der die zu steuernde Flussrate gering ist, nur schwierig zu erreichen ist.

Die DE 101 33 990 A1 beschreibt ein Wegeventil in Schieberbauart, mit einem in einer Ventilbohrung eines Gehäuses geführten Ventilkörper, über den eine Verbindung zwischen einem stirnseitigen Anschluss und zumindest einem Radialanschluss auf- und zusteuerbar sind, wobei der an einem Anschluss wirksame Druck über eine Verbindungsbohrung zur Ventilkörperrückseite geführt ist.

Durch die FR 2 805 492 gehört ein Steuerungssystem für eine Fahrzeugaufhängung zum Stand der Technik. Dieses System umfasst ein Ventil, das einen hülsenförmigen Ventilkörper aufweist. Der Ventilkörper wird durch einen von einem Aktuator über einen Stößel und eine mit Bohrungen versehene Übertragungsscheibe bewegt.

Die bekannten Stromregelventile in Schieberbauart hingegen weisen allgemein einen nicht minimierten Strombedarf bzw. eine nicht minimierte Baugröße des Proportional-Magneten auf.

Ausgehend von diesem Stand der Technik liegt der Erfindung die Aufgabe zugrunde, ein Stromregelventil zu schaffen, das eine geringe Baugröße bei exakter Volumenstromsteuerung über den gesamten vorgesehenen Betriebsbereich ermöglicht und dessen Energiebedarf minimiert ist.

Die dahingehende Aufgabe wird von einem Stromregelventil mit den Merkmalen des Patentanspruches 1 in seiner Gesamtheit gelöst.

Erfindungsgemäß ist vorgesehen, dass der Druckmeldekanal parallel zur Längs- oder Betätigungsachse des Stromregelventils als gebohrter Längskanal im Ventilgehäuse und parallel zum Steuerkolben an diesem vorbeigeführt ist, und dass eine Messblende (14) durch einen freien Öffnungsquerschnitt in einer in Richtung des Fluideingangs weisenden Stirnfläche des Steuerkolbens (3) gebildet ist.

Für das Einwirken des Ankers auf den Steuerkolben dient der Druckmeldekolben und mittels eines Druckmeldekanals ist der Fluideingang fluidführend mit einer Druckmeldekammer verbunden. Der in der Druckmeldekammer anstehende Fluiddruck beaufschlagt den Druckmeldekolben sowie den Steuerkolben im Sinne einer Entlastung des Proportional-Magneten mit einer Kraft.

Der Druckmeldekolben ist mit dem Steuerkolben vorzugsweise lose verbunden und auf den Druckmeldekolben wirken dadurch Kräfte im Sinne einer Entlastung des Proportional-Magneten ein. Zudem werden die notwendigen Betätigungskräfte für den Steuerkolben dadurch verringert, da seine Projektionsfläche in Fluid-Strömungsrichtung durch die Querschnittsfläche des insoweit in den Steuerkolben hineinragenden Druckmeldekolbens geschmälert wird. Das erfindungsgemäße Stromregelventil weist somit zwei konstruktive Maßnahmen auf kleinstem Raum auf, die notwendigen Betätigungskräfte und damit den Energieverbrauch für sein Ventilelement in Form des Steuerkolbens zu reduzieren, nämlich durch die Wirkungsumkehr der Fluidströmung auf den Druckmeldekolben durch die druckmeldekolbenrückseitige Fluidbeaufschlagung in der Druckmeldekammer und der damit einhergehenden Verringerung der angeströmten bzw. druckbeaufschlagten Projektionsfläche oder Stirnfläche des Steuerkolbens selbst. Insgesamt kommt es insoweit zu einer Reduzierung der resultierenden druckwirksamen Gesamtfläche. Damit ist insgesamt ein Stromregelventil geschaffen, das ausgesprochen flache Kennlinienverläufe aufweist, so dass die Solenoid-Antriebskraft des Stromregelventils über den gesamten Bereich des Ventilhubes in Beziehung auf einen identischen Antriebsstrom vergleichgemäßigt wird, wobei nahezu 100% gerade Kennlinienverläufe erreichbar sind.

Die vom Fluiddruck des Fluideingangs wirksam beaufschlagten Steuerflächen des Steuerkolbens und die des Druckmeldekolbens ergeben voneinander abgezogen eine vom Fluiddruck beaufschlagte Reststeuerfläche mit einer Krafteinleitung auf die beiden Kolben dergestalt, dass die Entlastung für den Proportional-Magneten hergestellt ist. Ohne den Druckmeldekolben mit seiner druckwirksamen Meldekolben-Rückseite würde der gesamte Fluiddruck auf der Fluid-Eingangsseite des Ventils auf der insoweit zugewandten Stirnseite des Ventilelementes oder Steuerkolbens anstehen mit der Folge, dass der Proportional-Magnet sehr große Betätigungskräfte für das Ventilelement, respektive den Steuerkolben aufzubringen hätte. Dies würde wiederum konstruktiv groß aufbauende Proportional-Magnete innerhalb der Ventilvorrichtung voraussetzen, die auch einen entsprechend hohen Energiebedarf hätten. Durch den Einsatz des Druckmeldekolbens werden, wie dargelegt, die notwendigen Betätigungskräfte reduziert, so dass klein aufbauende Proportional-Magnete für die Ansteuerungsaufgaben genügen mit entsprechend geringem Leistungsbedarf. Im übrigen begünstigt auch der Druckmeldekolben den modularen Aufbau des Stromventils, da in normierter Größenabstufung Ventilbauelemente einschließlich des ProportionalMagneten eingesetzt werden können, um verschiedenste Leistungsklassen an zu beherrschenden Fluidströmen abdecken zu können. Es ist für einen Durchschnittsfachmann auf dem Gebiet der Ventiltechnik überraschend, dass er durch den Einsatz eines Druckmeldekolbens sowie einer Fluidführung auf seine dem Proportional-Magneten zugewandten Seite erstmalig dessen Betätigungskraft deutlich reduzieren kann.

Bei einer bevorzugten Ausführungsform des erfindungsgemäßen Stromregelventils ist vorgesehen, dass der Druckmeldekanal eine permanent fluidführende Verbindung zwischen dem Fluideingang und der Druckmeldekammer herstellt.

Bei einer besonders bevorzugten Ausführungsform des erfindungsgemäßen Stromregelventils wirkt der Anker nicht direkt auf den Steuerkolben ein, sondern der den Steuerkolben axial ganz durchgreifende Druckmeldekolben dient als eine Art Zwischenglied zwischen dem Anker und dem Steuerkolben. Er wird von dem Anker zumindest mittelbar betätigt und in Abhängigkeit von dem gemessenen Pumpendruck an dem Fluideingang des Steuerkolbens und damit dem Öffnungsquerschnitt der fluidführenden Verbindung eingestellt.

In einem bevorzugten Ausführungsbeispiel weist der Druckmeldekolben eine größte Stirnfläche auf, die vorzugsweise etwa einem Viertel der durch den Steuerkolben beschriebenen Stirnfläche entspricht.

Der Durchmesser des Druckmeldekolbens oder dessen Querschnittsfläche ist im Bereich der Messblende des Steuerkolbens am geringsten. Die Messblende kann etwa denselben Innendurchmesser aufweisen wie der größte Durchmesser des Druckmeldekolbens oder geringfügig größer sein, damit der Druckmeldekolben bei der Montage, beispielsweise von der Seite der Messblendenöffnung, durch den Steuerkolben geführt werden kann. Der Druckmeldekolben kann über eine Mitnahmescheibe mit dem Steuerkolben lose verbunden sein, und zwar dahingehend, dass die Mitnahmescheibe den Steuerkolben in Wirkrichtung der bestromten Proportional-Magnetspule mitnimmt, dass aber jedenfalls in entgegengesetzter Verfahrrichtung des Ankers und des Druckmeldekolbens eine Relativbewegung beider Kolben zueinander möglich ist. Vorzugsweise ist aber vorgesehen, dass mittels einer separaten Druckfeder in jeder Verfahrstellung die beiden genannten Kolben mit einer geringen Vorspannkraft über die Mitnahmescheibe miteinander in Wirkverbindung sind.

Die Mitnahmescheibe ist an dem Steuerkolben auf der der Messblendenöffnung gegenüberliegenden Seite angeordnet. Auf der Seite der Messblendenöffnung selbst ist der Steuerkolben von einer Druckfeder geringster Federrate beaufschlagt, um den Zusammenhalt derselben zu gewährleisten und um zum anderen insbesondere den Steuerkolben mit seiner Mitnahmescheibe gegen einen durch den Durchmessersprung in dem Druckmeldekolben gebildeten Anschlag zu drücken. Durch einen

Durchmessersprung wird der Eingriffsbereich an dem Druckmeldekolben für die Mitnahmescheibe gebildet, indem eben der Durchmesser oder die Querschnittsfläche des Druckmeldekolbens zu dem Proportional-Magneten bzw. zu dem Betätigungsanker hin größer ausgebildet ist als zu dem Steuerkolben. An dem Steuerkolben angeordnete Abströmöffnungen sind radial angeordnet und durchgreifen den Steuerkolben in einer Ebene an mehreren, vorzugsweise zur Längsachse der Vorrichtung diametral einander gegenüberliegenden Stellen.

Die Funktion des Stromregelventils kann ziehend oder drückend sein, in dem Sinne, dass im unbestromten Zustand des Proportional-Magneten eine Sperrstellung des Steuerkolbens in Bezug auf die genannte fluidführende Verbindung besteht oder eine geöffnete Schaltstellung für die genannte fluidführende Verbindung im Ventilgehäuse.

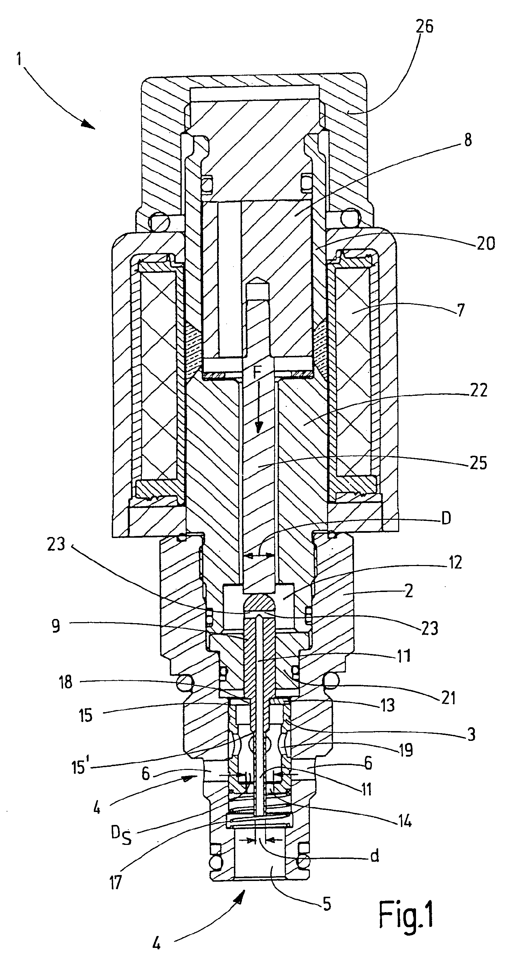

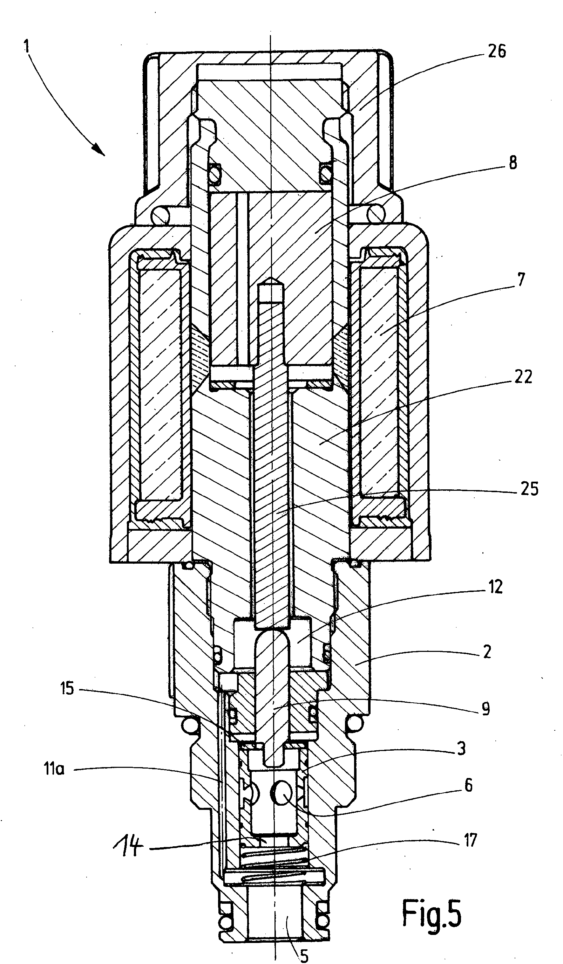

Im Folgenden wird das erfindungsgemäße Stromregelventil anhand von Ausführungsbeispielen nach der Zeichnung näher erläutert. Dabei zeigen in prinzipieller und nicht maßstäblicher Art die Fig.1 bis 4 nur Gegenstände zur Erläuterung des Hintergrundes der Erfindung und sind nicht Gegenstand des Patentanspruchs 1, wohingegen die erfindungsgemäße Lösung in Fig. 5 unmittelbar dargestellt ist.
- Fig. 1: einen Längsschnitt durch ein Stromregelventil mit einer geschlossenen fluidführenden Verbindung in einem unbestromten Zustand des Proportional-Magneten;
- Fig. 2: einen Längsschnitt durch das Stromregelventil nach der Fig. 1 mit einer geöffneten fluidführenden Verbindung in einem bestromten Zustand des Proportional-Magneten;
- Fig. 3: einen Längsschnitt durch ein weiteres zweites Stromregelventil mit einer geöffneten fluidführenden Verbindung in einem unbestromten Zustand des Proportional-Magneten;
- Fig. 4: einen Längsschnitt durch das Stromregelventil nach der Fig. 3 in einem geschlossenen Zustand der fluidführenden Verbindung im bestromten Zustand des Proportional-Magneten; und
- Fig. 5: einen Längsschnitt durch ein erfindungsgemäßes Stromregelventil bei dem ein Druckmeldekanal innerhalb des Ventilgehäuses angeordnet an dem Steuerkolben vorbeigeführt ist.

In der Fig. 1 ist in einem Längsschnitt ein elektromagnetisches 2-Wege-Proportional-Stromregelventil 1 gezeigt, das in der Lage ist, einen Fluid-Volumenstrom von einer nicht dargestellten Fluidpumpe zu einem nicht dargestellten hydraulisch angeschlossenen Verbraucher unabhängig von Druckschwankungen im wesentlichen konstant zu halten. Das elektromagnetische 2-Wege-Stromregelventil 1 kann auf der Vorlaufseite oder auf der Rücklaufseite des nicht gezeigten hydraulischen Verbrauchers, beispielsweise in Form eines Arbeitszylinders einer Baumaschine oder dergleichen, den Volumenstrom regeln.

Das im Folgenden nur noch verkürzt als Stromregelventil 1 bezeichnete Ventil, weist ein Ventilgehäuse 2 auf, das in der Art einer Einschraub-Patronenlösung ausgebildet ist. Das Ventilgehäuse 2 weist einen zentralen Fluideingang 5 an seinem unteren, axialen Ende auf und mehrere radiale Abströmöffnungen 6, von denen zwei in der Längsschnittdarstellung gezeigt sind. Ein in der Art eines Schieberkolbens ausgebildeter, hülsenförmiger Steuerkolben 3 ist als Ventilglied verschiebbar in einer Bohrung in dem Ventilgehäuse 2 geführt. Er wird von einer zylindrischen oder konischen Druckfeder 17 in Richtung auf einen an dem anderen Ende des Ventilgehäuses 2 eingeschraubten Proportional-Magneten 7 gehalten. Der Steuerkolben 3 weist an seinen beiden Enden scheibenartige Abschlüsse auf, wobei die Scheibe in Richtung des Fluideingangs 5 einstückig mit dem Steuerkolben 3 ausgebildet ist, und eine Messblende 14 mit einem Durchmesser Ds aufweist, von der Druckmittel ins Innere des Steuerkolbens 3 gelangen kann.

Die an seinem anderen Ende aufliegende Scheibe bildet eine Art Mitnahmescheibe aus und ist mit einer Öffnung 18 versehen. In der Wand des Steuerkolbens 3 selbst sind radiale Durchtrittsöffnungen 19 eingebracht, die eine fluidführende Verbindung 4 von dem Fluideingang 5 zu den Abströmöffnungen 6 je nach Verfahrstellung des Steuerkolbens 3 erlauben oder die dahingehende Verbindung sperren, wie dies in der Fig.1 dargestellt ist.

Der Steuerkolben 3 öffnet und verschließt mithin die fluidführende Verbindung 4 über Kraftbeaufschlagung eines von dem Proportional-Magneten 7 in einem Polrohr 20 bewegten Ankers 8, der fachsprachlich auch mit Magnetanker bezeichnet wird. Der Proportional-Magnet 7 wird über eine nicht näher dargestellte Rechnereinheit nebst zugehöriger Sensorik angesteuert. Die dahingehende Ansteuerung ist für Stromregelventile üblich, so dass an dieser Stelle hierauf nicht mehr näher eingegangen wird. Eine Druckmeldekammer 12 ist zwischen einem Führungsteil 21 für einen Druckmeldekolben 9 und einem Polrohrsockel 22 in dem Ventilgehäuse 2 des Stromregelventils 1 angeordnet.

Der Druckmeldekolben 9 durchragt mit seinem verdickten Bereich mit einem Durchmesser D das Führungsteil 21, das eine Art feststehendes Axial-Gleitlager für den Druckmeldekolben 9 ausbildet. Das Führungsteil 21 und der Polrohrsockel 22 sind in dichtender Weise in dem Ventilgehäuse 2 stationär festgelegt. Der Druckmeldekolben 9 durchragt mit sich abstufend verkleinerndem Durchmesser nach unten hin den Steuerkolben 3 axial mittig und weist einen zentralen Druckmeldekanal 11, vorzugsweise in Form einer Bohrung, auf. Der dahingehend als Druckmeldebohrung 11 ausgeführte Druckmeldekanal führt von dem Fluideingang 5 zu der Druckmeldekammer 12 in die als Axialbohrung ausgebildete Druckmeldebohrung 11, die in mindestens zwei radial verlaufende Stichbohrungen 23 ausmündet. Der Druckmeldekolben 9 weist einen weiteren Durchmessersprung 15 an der Öffnung 18 einer Mitnahmescheibe 13 des Steuerkolbens 3 auf, so dass sich der Durchmesser D, den er in seinem von dem Führungsteil 21 geführten Bereich aufweist, auf etwa den Durchmesser der Öffnung 18 verringert.

Mit Hilfe dieser Durchmesserverkleinerung ist eine formschlüssige Anlage des Druckmeldekolbens 9 sowie eine Verbindung mit dem Steuerkolben 3 geschaffen. Die Verbindung ist derart realisiert, dass eine Relativbewegung zwischen Steuerkolben 3 und Druckmeldekolben 9 ermöglicht ist, wobei die Druckfeder 17 den Steuerkolben 3 über die Mitnahmescheibe 13, an dem der Steuerkolben 3 mit seinem Außenumfang lose anliegt, gegen den Durchmessersprung 15 des Druckmeldekolbens 9 drückt, so dass die dahingehenden Kolben 3, 9 in jeder Verfahrstellung permanent miteinander in Anlage gehalten sind.

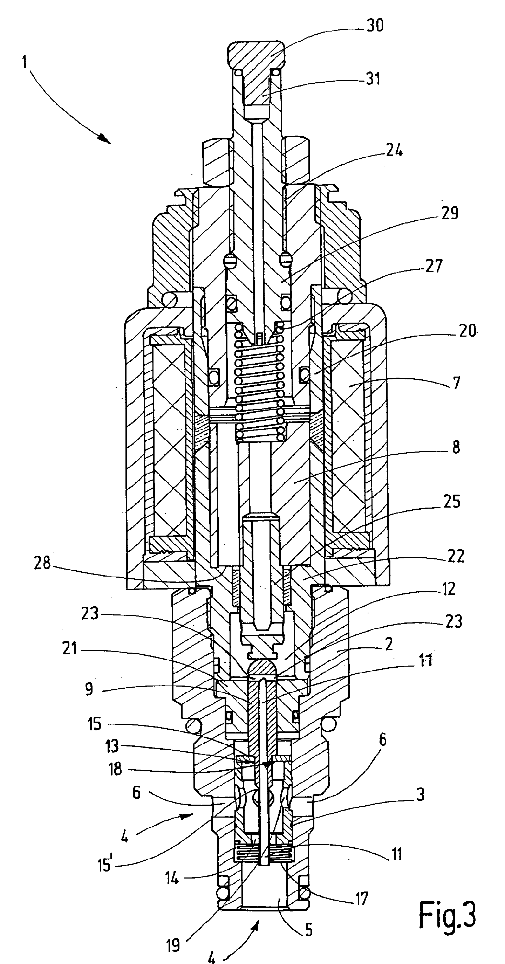

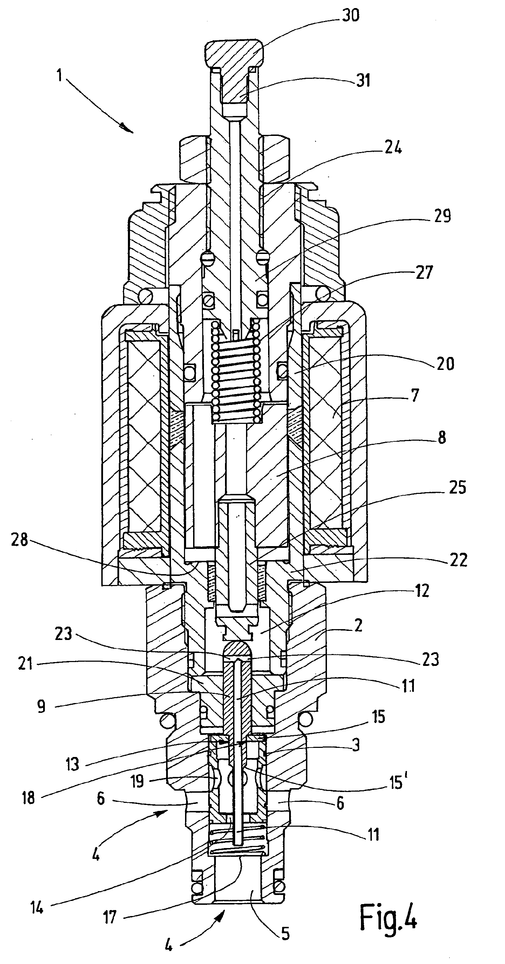

Ein weiterer Durchmessersprung 15' ist am Druckmeldekolben 9 innerhalb seines Bereiches in dem Steuerkolben 3 vorhanden. Der Außendurchmesser des Druckmeldekolbens 9 verringert sich dabei auf ein Kleinstmaß d, so dass er als Hohlnadel durch den übrigen Axialbereich des Steuerkolbens 3 in Richtung des Fluideingangs 5 ragt. Der Druckmeldekolben 9 kann bei dem zweiten Ausführungsbeispiel nach den Fig.3 und 4 an seinem druckmeldekammerseitigen Ende von einem mit dem Anker 8 über ein Einstellgewinde 24 verbundenen Stößel 25 mit einer vorgebbaren Betätigungskraft in der Grundstellung beaufschlagt sein.

Durch die Anordnung des Druckmeldekolbens 9 mit dem Steuerkolben 3 ist eine Art Druckwaage gebildet. Auf der dem Fluideingang 5 zugewandten Seite des Steuerkolbens 3 herrscht vor der Messblende 14 ein entsprechend hoher Druck, der aufgrund der Messblende 14 zu einem demgegenüber niedrigeren Druckwert übergeht, der auf der Rückseite des Steuerkolbens 3 anliegt und aufgrund eines nicht näher dargestellten Eingriffsschlitzes (Öffnung 18) an der Mitnahmescheibe 13 auf deren dem Fluideingang 5 abgewandten Seite entsprechend ansteht.

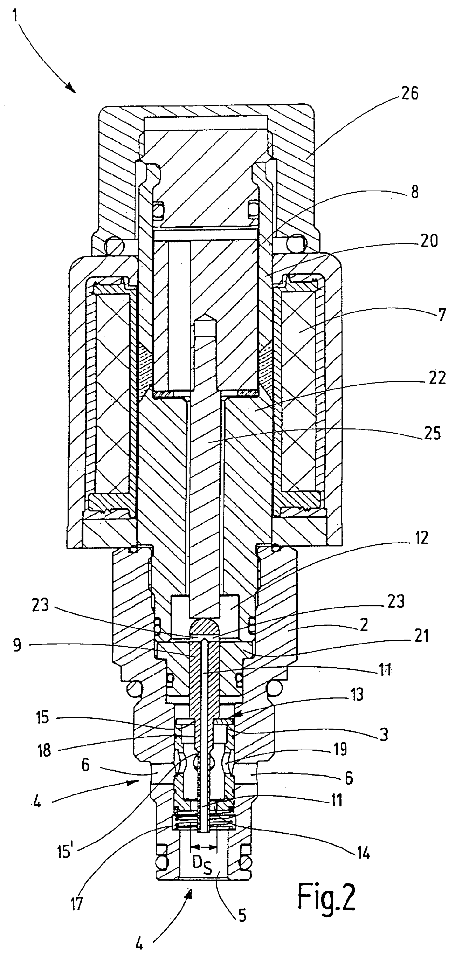

In der Fig.2 ist der Proportional-Magnet 7 entsprechend bestromt, wobei der Steuerkolben 3 in einer seiner Regelpositionen gezeigt ist und dabei der Proportional-Magnet 7 eine proportionale Kraft als Druckkraft auf einen mit dem Anker 8 verbundenen Stößel 25 weiterleitet, der die Druckmeldekammer 12 durchgreift und auf das obere Ende des Druckmeldekolbens 9 entsprechend einwirkt. Insoweit ist die fluidführende Verbindung 4 teilweise geöffnet, indem die Durchtrittsöffnungen 19 des Steuerkolbens 3 mit den Abströmöffnungen 6 teilweise in Überdeckung sind um eine Regelung für den Erhalt eines konstanten Volumenstromes vornehmen. Im dahingehenden Regelfall ist die Druckfeder 17 zumindest teilweise zusammengedrückt.

Der Druck in der Druckmeldekammer 12, der über die Druckmeldebohrung 11 und die Stichbohrungen 23 auch an den druckwirksamen Steuerflächen des Druckmeldekolbens 9 anliegt, unterstützt in dieser Ausführungsform des elektromagnetischen Stromregelventils 1 die Kraftwirkung des Proportional-Magneten 7 mit einer Kraft F in derselben Richtung wie die Betätigungskraft des Proportional-Magneten 7 wirkt. Durch diese Kraftentlastung kann ein konstruktiv kleiner aufgebauter Proportional-Magnet 7 zum Einsatz kommen als bei bekannten Lösungen, die auf den erfindungsgemäßen Druckmeldekolben 9 verzichten. Auch ist die dahingehende Entlastung energiesparend, da die Leistunsgaufnahme für den Proportional-Magneten 7 geringer ausfällt. Insoweit verringert also der größte Querschnitt des Druckmeldekolbens 9 die Projektionsfläche des Steuerkolbens 3 und die hieraus resultierende verbleibende Reststeuerfläche führt zu der den Proportional-Magneten 7 entlastenden Krafteinleitung.

Steigt der Fluiddruck in dem Fluideingang 5 an, so wird durch die druckwirksamen Flächen eine Verringerung des Hubes des Ankers 8 und des Kolbens 9 bewirkt, wodurch der Überschneidungsbereich von Durchtrittsöffnungen 19 und Abströmöffnungen 6 verringert wird mit der Folge, dass unter Abregelung des abzugehenden Volumenstromes dieser nach wie vor konstant bleibt. Insoweit bildet also die jeweilige Abströmöffnung 6 mit der jeweils zuordenbaren Durchtrittsöffnung 19 die Regelblende des Stromregelventils 1 aus. Aufgrund der spielbehafteten Stößelführung für den Stößel 25 im Polrohrsockel 22 und einer Durchgriffsbohrung im Magnetanker 8 steht der in der Druckmeldekammer 12 herrschende Druck auch in druckausgeglichener Weise am Anker 8 an. Dies gewährleistet einen hemmnisfreien Betrieb der Anker-Stößelanordnung. Der in dem Polrohr 20 geführte Anker 8 ist in üblicher Weise nach außen hin mit einer Abdeckkappe 26 versehen, die in der Art einer Schraubverbindung mit den sonstigen Ventilteilen des Stromregelventils 1 verbunden ist. Durch die dahingehende Schraubverbindung kann der Proportional-Magnet 7 auf dem Polrohr 20 sowie dem Polrohrsockel 22 festgelegt werden.

In den Fig. 3 und 4 ist eine weitere Ausführungsvariante des elektromagnetischen 2-Wege-Proportional-Stromregelventils 1 gezeigt, wobei die wesentlichen Bauteile des Ventils 1 und insbesondere die in seinem Ventilgehäuse 2 verbauten Komponenten im wesentlichen gleich der Ausführungsform nach den Fig. 1 und 2 sind. Für die gleichen Bauteile gelten daher dieselben Bezugszeichen und die insoweit hierzu bereits getroffenen Ausführungen. Im Gegensatz zu dem in den Fig. 1 und 2 gezeigten Ausführungsbeispiel wirkt der Anker 8 hier jedoch nicht drückend auf den Druckmeldekolben 9 ein, sondern wirkt im Sinne eines Freigebens eines vorgesehenen Verschiebeweges für den Steuerkolben 3 in ziehender Weise. In der Fig.3 ist daher eine geöffnete Schaltstellung im unbestromten Zustand der Magnetspule 7 gezeigt und in der Fig. 4 eine im wesentlichen geschlossene Schaltstellung im bestromten Zustand.

Gemäß Darstellung nach der Fig.3 ist der Druckmeldekolben 9 mit dem Steuerkolben 3 in Blickrichtung des Betrachters nach unten gedrückt, und zwar unter der Einwirkung einer Druckfeder 27, die entgegen der Wirkung der Druckfeder 17 auf den Magnetanker 8 eine Krafteinwirkung ausübt. In der Fig.4 wiederum ist der Proportional-Magnet 7 bestromt, wodurch der Anker 8 und der Stößel 25 nach oben bewegt sind, und zwar entgegen der Wirkung der genannten Druckfeder 27. Aufgrund der anstehenden, bereits beschriebenen Druckverhältnisse verschiebt sich gleichfalls der Steuerkolben 3 nebst dem Druckmeldekolben 9 in Blickrichtung auf Fig. 4 gesehen nach oben hin und es kommt zu einer schließenden Stellung für die fluidführende Verbindung 4.

Sofern gemäß der Darstellung nach der Fig.3 der Anker 8 durch die weitere Druckfeder 27 nach unten bewegt ist, liegt der Anker 8 in der untersten Verfahrstellung an einem unteren Anschlag 28 und im Polrohr 20 geführt an. Zur Einstellung der Betätigungskraft der Druckfeder 27 dient eine Einstellspindel 29, die über ein Einstellgewinde 24 drehbar in der Ventilanordnung geführt ist. Die Spindel 29 ist darüber hinaus an ihrem oberen freien Ende mit einer Art Entlüftungsschraube 30 verschlossen, die mit einem Schraubenteil 31 in ein zugeordnetes Innengewinde am freien Ende der Spindel 29 eingreift. Mit der dahingehenden Anordnung lässt sich über das angesprochene Gewinde der sogenannte Totstrom einstellen.

Bei dem Stromregelventil gemäß der Längsschnittdarstellung nach der Fig. 5 ist der dort gezeigte Druckmeldekanal 11a diesmal nicht durch den Druckmeldekolben 9 geführt, sondern verläuft parallel zur Längs- oder Betätigungsachse des Stromregelventils als gebohrter Längskanal im Ventilgehäuse 2 und ist insoweit parallel zum Steuerkolben 3 an diesem vorbeigeführt. Bei der dahingehenden Ausgestaltung ist der Druckmeldekolben massiv ausgestaltet und greift mit einem zapfenartigen Vorsprung in die Mitnehmerscheibe 15 des Steuerkolbens 3 ein. Des weiteren ist die Messblende 14 nunmehr durch den freien unteren Öffnungsquerschnitt des Steuerkolbens 3 gebildet. Insoweit leitet aber auch der Druckmeldekanal 11a, wie bei den vorstehend beschriebenen Lösungen, den Fluiddruck von der Fluideingangsseite 5 auf die Rückseite des Druckmeldekolbens 9, indem der Kanal 11 a in der Druckkammer 12 ausmündet.

## Patentansprüche

1. Stromregelventil mit einem Ventilgehäuse (2), in dem ein Steuerkolben (3) axial verschiebbar geführt ist, der mindestens eine fluidführende Verbindung (4) zwischen einem Fluideingang (5) und einer Abströmöffnung (6) ansteuert, wobei ein von einem Proportional-Magneten (7) betätigbarer Anker (8) auf den Steuerkolben (3) einwirkt, wobei für das Einwirken des Ankers (8) auf den Steuerkolben (3) ein Druckmeldekolben (9) dient, wobei mittels eines Druckmeldekanals (11a) der Fluideingang (5) fluidführend mit einer Druckmeldekammer (12) derart verbunden ist, dass der in der Druckmeldekammer (12) anstehende Fluiddruck den Druckmeldekolben (9) sowie den Steuerkolben (3) im Sinne einer Entlastung des Proportionalmagneten (7) mit einer Kraft (F) beaufschlagt, wobei der Druckmeldekanal (11a) parallel zur Längs- oder Betätigungsachse des Stromregelventils als gebohrter Längskanal im Ventilgehäuse (2) und parallel zum Steuerkolben (3) an diesem vorbeigeführt ist, und wobei eine Messblende (14) durch einen freien Öffnungsquerschnitt in einer in Richtung des Fluideingangs (5) weisenden Stirnfläche des Steuerkolbens (3) gebildet ist.

2. Stromregelventil nach Anspruch 1, **dadurch gekennzeichnet, dass** die vom Fluiddruck wirksam beaufschlagten Steuerflächen des Steuerkolbens (3) und die des Druckmeldekolbens (9) voneinander abgezogen eine vom Fluiddruck beaufschlagte Reststeuerfläche mit einer Krafteinleitung auf die beiden Kolben (3,9) ergibt, die die Entlastung für den Proportional-Magneten (7) bewirkt.

3. Stromregelventil nach Anspruch 1 oder 2, **dadurch gekennzeichnet, dass** der Druckmeldekanal (11a) eine permanent fluidführende Verbindung zwischen dem Fluideingang (5) und der Druckmeldekammer (12) herstellt.

4. Stromregelventil nach einem der Ansprüche 1 bis 3, **dadurch gekennzeichnet, dass** der mittels des Proportional-Magneten (7) axial verschiebbare Anker (8) über den Druckmeldekolben (9) als Zwischenglied permanent auf den Steuerkolben (3) einwirkt.

5. Stromregelventil nach einem der Ansprüche 1 bis 4, **dadurch gekennzeichnet, dass** der Druckmeldekolben (9) eine zu dem Fluideingang (5) gerichtete größte Stirnfläche aufweist, die etwa ein Viertel der von dem Steuerkolben (3) beschriebenen, in Richtung des Fluideingangs (5) weisenden Stirnfläche beträgt.

6. Stromregelventil nach einem der Ansprüche 1 bis 5, **dadurch gekennzeichnet, dass** die Messblende (14) etwa denselben Innendurchmesser (Ds) aufweist wie der größte Durchmesser (D) des Druckmeldekolbens (9).

7. Stromregelventil nach einem der Ansprüche 1 bis 6, **dadurch gekennzeichnet, dass** der Druckmeldekolben (9) über eine Mitnahmescheibe (15) mit dem Steuerkolben (3) lose verbunden ist.

8. Stromregelventil nach Anspruch 7, **dadurch gekennzeichnet, dass** die Mitnahmescheibe (15) eine freie axiale Verschiebbarkeit des Steuerkolbens (3) relativ zu dem Druckmeldekolben (9) ermöglicht.

9. Stromregelventil nach einem der Ansprüche 1 bis 8, **dadurch gekennzeichnet, dass** der Druckmeldekolben (9) einen einzigen Durchmessersprung aufweist und dass sein Durchmesser in Richtung des Fluideingangs (5) am geringsten ist.

10. Stromregelventil nach einem der Ansprüche 1 bis 9, **dadurch gekennzeichnet, dass** der Durchmesser oder die Querschnittsfläche des Druckmeldekolbens (9) zu dem Proportional-Magneten (7) hin gesehen größer ausgebildet ist als in Richtung des Steuerkolbens (3).

11. Stromregelventil nach einem der Ansprüche 1 bis 10, **dadurch gekennzeichnet, dass** der Steuerkolben (3) in einem unbestromten Zustand des Proportional-Magneten (7) in einer Sperrstellung oder in einer geöffneten Schaltstellung bezogen auf die fluidführenden Verbindung (4) ist.

## Claims

1. A flow control valve that has a valve housing (2) in which a control piston (3) is guided in such a way that it can be displaced axially, which control piston actuates at least one fluid-conducting connection (4) between a fluid inlet (5) and an outflow opening (6), an armature (8) that can be actuated by a proportional solenoid (7) acting on the control piston (3), a pressure detecting piston (9) serving for the action of the armature (8) on the control piston (3), the fluid inlet (5) being connected in a fluid-conducting manner to a pressure detecting chamber (12) by means of a pressure detecting duct (11 a) in such a way that the fluid pressure prevailing in the pressure detecting chamber (12) applies a force (F) to the pressure detecting piston (9) and the control piston (3) in the direction of relief of the proportional solenoid (7), the pressure detecting duct (11 a) being parallel to the longitudinal or actuation axis of the flow control valve as a bored longitudinal duct in the valve housing (2) and being guided past the control piston (3) parallel to it, and a metering orifice (14) through a free opening cross-section being formed in a face surface of the control piston (3) pointing towards the fluid inlet (5).

2. The flow control valve according to Claim 1, **characterised in that** the control surfaces of the control piston (3) to which fluid pressure is effectively applied, and the control surfaces of the pressure detecting piston (9) yield, when pulled away from each other, a remaining control surface to which fluid pressure is applied and that introduces a force to the two pistons (3, 9) in such a way that relief for the proportional solenoid (7) is established.

3. The flow control valve according to Claim 1 or 2, **characterised in that** the pressure detecting duct (11 a) produces a permanently fluid-conducting connection between the fluid inlet (5) and the pressure detecting chamber (12).

4. The flow control valve according to any of Claims 1 to 3, **characterised in that** the armature (8), which can be axially displaced by means of the proportional solenoid (7), acts permanently on the control piston (3) by means of the pressure detecting piston (9) as an intermediate member.

5. The flow control valve according to any of Claims 1 to 4, **characterised in that** the pressure detecting piston (9) has a largest face surface which faces the fluid inlet (5) and that is equal to about a quarter of the face surface described by the control piston (3) and points in the direction of the fluid inlet (5).

6. The flow control valve according to any of Claims 1 to 5, **characterised in that** the metering orifice (14) has approximately the same inside diameter (Ds) as the largest diameter (D) of the pressure detecting piston (9).

7. The flow control valve according to any of Claims 1 to 6, **characterised in that** the pressure detecting piston (9) is loosely connected to the control piston (3) by means of a drive plate (15).

8. The flow control valve according to Claim 7, **characterised in that** the drive plate (15) makes it possible to freely move the control piston (3) in the axial direction relative to the pressure detecting piston (9).

9. The flow control valve according to any of Claims 1 to 8, **characterised in that** the pressure detecting piston (9) has a single abrupt change in diameter and that its diameter in the direction of the fluid inlet (5) is the smallest.

10. The flow control valve according to any of Claims 1 to 9, **characterised in that** the diameter or the cross-sectional area of the pressure detecting piston (9) is designed larger, when seen in the direction of the proportional solenoid (7), than in the direction of the control piston (3).

11. The flow control valve according to any of Claims 1 to 10, **characterised in that** in a non-energised state of the proportional solenoid (7) the control piston (3) is in a blocking position or in an open switching position relative to the fluid-conducting connection (4).

## Revendications

1. Régulateur de débit ayant un corps (2) de régulateur, dans lequel est guidé à coulissement axialement un piston (3) de commande, qui commande au moins une liaison (4) fluidique entre une entrée (5) de fluide et une ouverture (6) d'évacuation, dans lequel une culasse (8) pouvant être actionnée par un aimant (7) proportionnel agit sur le piston (3) de commande, dans lequel un piston (9) indicateur de pression sert pour l'action de la culasse (8) sur le piston (3) de commande, dans lequel, au moyen d'un conduit (11a) indicateur de pression, l'entrée (5) pour du fluide communique fluidiquement avec une chambre (12) indicatrice de pression de manière à ce que la pression du fluide régnant dans la chambre (12) indicatrice de pression applique au piston (9) indicateur de pression ainsi qu'au piston (3) de commande une force (F) dans le sens d'une décharge de l'aimant (7) proportionnel, dans lequel le conduit (11a) indicateur de pression passe, parallèlement à l'axe longitudinal ou d'actionnement du régulateur de débit sous la forme d'un conduit longitudinal percé dans le corps (2) de régulateur et parallèlement au piston (3) de commande, devant celui-ci et dans lequel un diaphragme (14) de mesure est formé par une section transversale libre d'ouverture dans une surface frontale, tournée dans la direction de l'entrée (5) du fluide, du piston (3) de commande.

2. Régulateur de débit suivant la revendication 1, **caractérisé en ce que** les surfaces de commande, soumises à l'action de la pression du fluide, du piston (3) de commande et celles du piston (9) indicateur de pression donnent en déduction les unes des autres une surface de commande restante soumise à la pression du fluide avec application d'une force sur les deux pistons (3, 9), qui provoque la décharge pour l'aimant (7) proportionnel.

3. Régulateur de débit suivant la revendication 1 ou 2, **caractérisé en ce que** le conduit (11a) indicateur de pression ménage une liaison fluidique permanente entre l'entrée (5) pour du fluide et la chambre (12) indicatrice de pression.

4. Régulateur de débit suivant l'une des revendications 1 à 3, **caractérisé en ce que** la culasse (8) coulissant axialement au moyen de l'aimant (7) proportionnel agit par l'intermédiaire du piston (9) indicateur de pression comme élément intermédiaire en permanence sur le piston (3) de commande.

5. Régulateur de débit suivant l'une des revendications 1 à 4, **caractérisé en ce que** le piston (9) indicateur de pression a une surface frontale la plus grande tournée vers l'entrée (5) pour du fluide, qui représente environ un quart de la surface frontale décrite par le piston (3) de commande et tournée dans la direction de l'entrée (5) pour du fluide.

6. Régulateur de débit suivant l'une des revendications 1 à 5, **caractérisé en ce que** le diaphragme (14) de mesure a, à peu près, le même diamètre (Dₛ) intérieur que le diamètre (D) le plus grand du piston (9) indicateur de pression.

7. Régulateur de débit suivant l'une des revendications 1 à 6, **caractérisé en ce que** le piston (9) indicateur de pression est relié de manière lâche au piston (3) de commande par un disque (15) d'entraînement.

8. Régulateur de débit suivant la revendication 7, **caractérisé en ce que** le disque (15) d'entraînement rend possible un coulissement axial libre du piston (3) de commande par rapport au piston (9) indicateur de pression.

9. Régulateur de débit suivant l'une des revendication 1 à 8, **caractérisé en ce que** le piston (9) indicateur de pression a un saut unique de diamètre et **en ce que** son diamètre est le plus petit en direction de l'entrée (5) pour du fluide.

10. Régulateur de débit suivant l'une des revendication 1 à 9, **caractérisé en ce que** le diamètre ou la surface de section transversale du piston (9) indicateur est plus grand, considéré vers l'aimant (7) proportionnel, que dans la direction du piston (3) de commande.

11. Régulateur de débit suivant l'une des revendication 1 à 10, **caractérisé en ce que** le piston (3) de commande est, dans un état non alimenté en courant de l'aimant (7) proportionnel, dans une position de fermeture ou dans une position de commutation ouverte, en ce qui concerne la liaison (4) fluidique.
